# FASCICULE DE BREVET EUROPEEN

(11) **EP 1 161 195 B1**
(45) Date de publication et mention de la délivrance du brevet: **15.10.2003**
(21) Numéro de dépôt: 99905139.4
(22) Date de dépôt: 12.03.1999
(51) Int. Cl.: A61C 5/04

(54) **DISPOSITIF D'OBTURATION DE LA CAVITE PULPAIRE D'UNE DENT DEVITALISEE**
VORRICHTUNG ZUM FÜLLEN VON WURZELKANÄLEN EINES DEVITALISIERTEN ZAHNES
DEVICE FOR SEALING THE PULP CAVITY IN A DEVITALIZED TOOTH

(43) Date de publication de la demande: 12.12.2001
(73) Titulaire: Meditecnic Inc, Carson City, Nevada 89703-4121 (US)
(72) Inventeur: ROSSELL, Jordi, CH-1092 Belmont-sur-Lausanne (CH)
(74) Mandataire: Nithardt, Roland
(86) Numéro de dépôt international: IB9900402
(87) Numéro de publication internationale: WO00054694

(56) Documents cités:
- EP-A- 0 538 200
- BE-A- 834 432

## Description

La présente invention se rapporte à un dispositif d'obturation de la cavité pulpaire et des canaux radiculaires d'une dent dévitalisée, comprenant une pompe à vide, un premier conduit de liaison entre cette pompe à vide et ladite cavité pulpaire, une source de substance fluide d'obturation de cette cavité pulpaire, un second conduit de liaison entre ladite source de substance fluide et ladite cavité pulpaire, et des moyens de fermeture dudit second conduit pour mettre ladite source de substance fluide d'obturation sélectivement en communication avec ladite cavité.

Le volume formé par le système radiculaire de la dent est borgne, car l'air ne peut pas s'échapper par la terminaison apicale de chaque racine. L'air s'échappe donc tant bien que mal par l'accès aménagé par le dentiste lors d'une obturation traditionnelle. Des volumes morts peuvent ne pas être comblés, offrant à la fois un risque d'infection et un affaiblissement de la structure de la dent.

Le remplissage sous vide est donc très bien adapté à l'obturation des canaux des racines des dents après dévitalisation de ces dernières. Le fluide amené sous vide atteint les moindres recoins de la géométrie canalaire, y compris l'entrée des canalicules radiaux de la surface des parois de chaque racine. Ceci a pour effet d'armer la structure de la dent pour lui donner une résistance accrue.

On a déjà proposé l'obturation de dents dévitalisées en mettant tout d'abord la cavité pulpaire sous un vide poussé et en reliant ensuite cette cavité à une source de produit d'obturation fluide, qui s'écoule vers cette cavité et la remplit jusqu'au niveau des canalicules par l'aspiration créée par le vide. Les premiers travaux de G. Korkhaus et R. Alfter dans ce domaine remontent à 1958. Toutefois, la mise en oeuvre était mal adaptée à la technique dentaire et n'a pas permis de sortir des travaux expérimentaux.

On a proposé dans le EP 0 299 919 un procédé de dévitalisation de dents utilisant le phénomène de cavitation, dans lequel on fait caviter une solution d'hypochlorite. Une fois le nettoyage et la désinfection effectués, on relie la chambre pulpaire à la source de vide utilisée pour créer la cavitation, afin d'éliminer tout le liquide en le vaporisant sous basse pression. Une fois la chambre séchée, on y crée le vide et on la relie ensuite à une source de produit fluide d'obturation.

Un des problèmes lié à cette solution vient du grand nombre de manipulation nécessaires pour passer du séchage à la phase de remplissage. De plus au cours de la phase de remplissage sous vide, il faut coordonner l'actionnement du piston d'une seringue destinée à alimenter le produit d'obturation avec la mise de ce produit d'obturation en communication avec la pompe à vide, ce qui constitue une phase très délicate laissée à l'appréciation de l'opérateur. Si les deux actions ne sont pas simultanées, c'est-à-dire si l'action du piston est retardée par rapport à la mise du produit d'obturation en liaison avec la dépression de la cavité à remplir, il y a freinage de l'écoulement du produit et risque d'un mauvais remplissage de la cavité et surtout des canalicules.

On a proposé de remédier à cet inconvénient dans le US 5' 295' 828, ou dans le EP 538 200, dans lequel le produit d'obturation est disposé dans un réservoir présentant une ouverture de sortie, pour faire communiquer ce réservoir avec la cavité pulpaire à remplir, fermée par un obturateur mécanique, commandé manuellement par un levier qui permet d'écarter cet obturateur de l'ouverture de sortie. L'opérateur ouvre cet obturateur lorsque la cavité pulpaire a été mise sous vide. Dans cette solution, un piston libre est monté dans le réservoir pour égaliser la pression exercée sur le produit d'obturation fluide. Toutefois, aucune pression autre que la pression atmosphérique ne s'exerce sur ce piston, de sorte que le remplissage de la cavité ne s'effectue que par l'aspiration provoquée par la dépression. Or, la communication de la pompe à vide avec la cavité pulpaire est rapidement coupée par le produit d'obturation et la dépression de la cavité pulpaire n'est pas toujours suffisante pour compenser les pertes de charges dans les conduits d'alimentation.

Le but de la présente invention est de permettre d'exercer simultanément une dépression du côté aval du réservoir de produit d'obturation fluide et une surpression du côté amont, en garantissant la parfaite simultanéité de l'exercice de ces deux effets, afin de favoriser le remplissage de la cavité des canaux latéraux et des canalicules par le produit d'obturation.

A cet effet, la présente invention a pour objet un dispositif d'obturation de la cavité pulpaire et des canaux radiculaires d'une dent dévitalisée selon la revendication 1.

La surpression qui s'exerce en amont a pour but essentiel de compenser les pertes de charges dans les conduits reliant le réservoir de produit d'obturation et la cavité pulpaire dévitalisée. La présence de la membrane calibrée permet de garantir que les deux forces d'aspiration en aval et de détente du ressort en amont s'exercent simultanément sur le produit d'obturation.

D'autres avantages apparaîtront à la lecture de la description ainsi que du dessin qui l'accompagne illustrant, schématiquement et à titre d'exemple, une forme d'exécution du dispositif d'obturation objet de la présente invention.
La figure 1 est une vue en élévation de cette forme d'exécution;
la figure 2 est une vue partielle en coupe de la figure 1 avec un détail agrandi illustré par la figure 2a;
la figure 3 est une vue en coupe d'un élément de filtrage utilisé au cours de la phase de séchage de la cavité pulpaire.

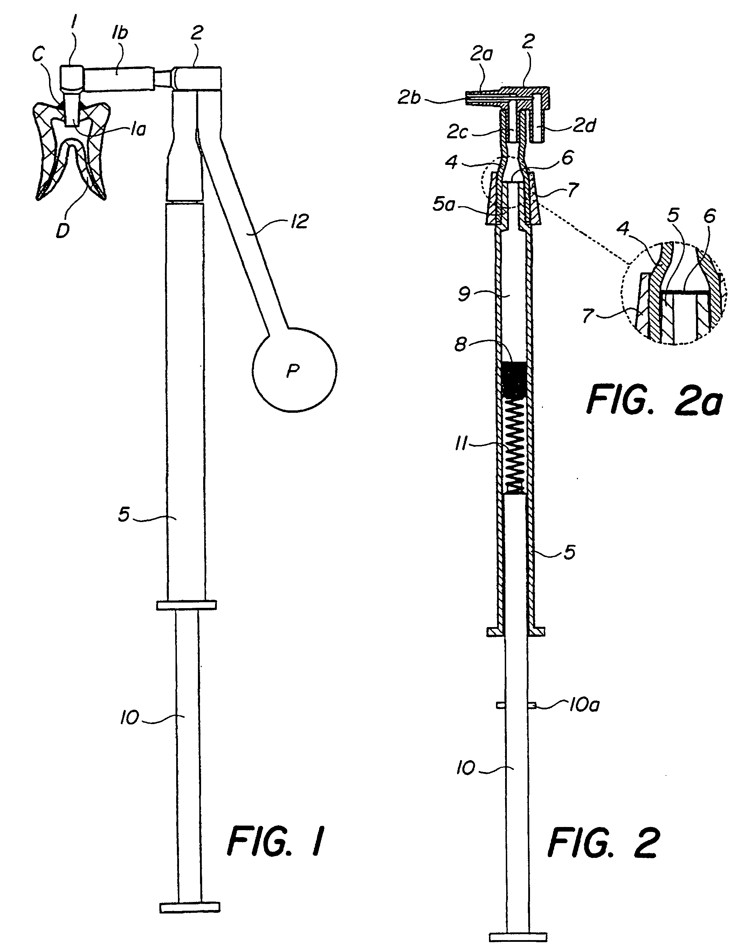

Le dispositif d'obturation illustré par les figures 1 et 2 comporte un premier embout coudé 1 dont une partie est formée par un conduit conique rigide la qui est introduit dans la cavité pulpaire de la dent dévitalisée D à travers une ouverture ménagée par le dentiste. Ce conduit 1a est scellé de façon étanche dans cet ouverture par un ciment C, avantageusement, un ciment composite photopolymérisable destiné aussi à assurer l'étanchéité. Cet embout 1 comporte un second conduit 1b en PVC. Dans le cas où la dévitalisation de la dent D a été réalisé par cavitation, l'embout 1 peut être utilisé aussi bien pour la dévitalisation que pour le séchage et l'obturation.

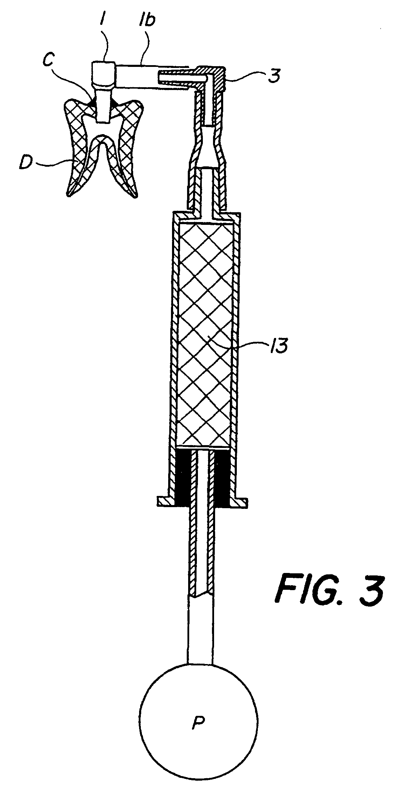

Le second conduit 1b en PVC est destiné à permettre la fixation amovible étanche d'un deuxième embout coudé 2 ou d'un troisième embout coudé 3 illustré par la figure 3 et dont le rôle sera expliqué par la suite.

Le deuxième embout coudé comporte d'une part deux conduits concentriques 2a, 2b et d'autre part deux conduits côte à côte 2c, 2d. Le conduit 2a communique avec le conduit 2c et le conduit 2b communique avec le conduit 2d. Le conduit 2c est relié par un raccord tubulaire souple 4 à l'extrémité de distribution, relativement rigide 5a, d'une seringue 5, avantageusement du type seringue à insuline. Une membrane 6, par exemple en aluminium, est pincée entre l'extrémité de distribution de la seringue 5 et le raccord tubulaire 4. Une bague de serrage 7 permet de réaliser une fixation suffisamment solide de la membrane 6.

L'intérieur de la seringue comporte un piston 8, délimitant l'espace 9 destiné à être rempli d'un produit fluide d'obturation de la cavité pulpaire de la dent D. Ce piston libre 8 est reliéau piston d'actionnement 10 de la seringue 5 par un ressort à boudin 11. De préférence, une butée 10a est disposée le long du piston d'actionnement 10 de la seringue 5 pour en limiter le déplacement.

Le conduit 2d de l'embout 2 est relié à une pompe à vide P par un conduit de liaison 12. Le conduit 2b de l'embout 2 en communication avec la pompe à vide P est formé d'un conduit capillaire de quelques dixièmes de mm de diamètre interne, destiné à offrir une grande résistance au reflux du produit d'obturation fluide lors de la phase d'obturation, afin de freiner fortement l'écoulement de ce produit en direction de la pompe à vide. Il est à remarquer que cette disposition coaxiale des conduits 2a et 2b permet de réaliser un conduit 2b de la plus faible section possible en réservant une grande section annulaire autour de lui, pour permettre l'écoulement du produit d'obturation avec une perte de charge aussi faible que possible.

Il est à remarquer que, outre l'étanchéité qui doit être assurée entre la pompe à vide P et la cavité pulpaire de la dent D, les volumes des conduits doivent être aussi petits que possible, car ils entrent dans le calcul du volume résiduel non rempli.

Le troisième embout 3 (figure 3) est destiné à remplacer l'embout 2 et se fixe de manière amovible et étanche dans le conduit en PVC 1b de l'embout 1. Cet embout 3 est relié au travers d'un filtre à la pompe à vide P lors de la phase de séchage de la cavité pulpaire de la dent D. Cette partie du dispositif ne fait partie à proprement parler de la présente invention et elle est par ailleurs connue, elle n'est représentée ici que pour expliquer le processus d'obturation dans son ensemble.

L'opération de séchage qui précède celle d'obturation s'opère en deux phases, la première est mécanique et la seconde est thermodynamique. La première phase vient du fait que le liquide résiduel dans le système radiculaire comporte une proportion de bulles d'air surtout consécutivement à une dévitalisation non instrumentale hydraulique, en particulier par cavitation. Ces bulles se dilatent sous l'effet de l'abaissement de la pression et expulsent instantanément la plus grande partie du liquide contenu dans chaque canal. Il est donc important de procéder au séchage sous vide tout de suite après un nettoyage hydraulique ou de recréer une agitation dans les canaux pour former des bulles de vapeur dissoute plus petites.

Laseconde phase est le changement d'état de liquide en vapeur de tout ce qui reste de la première phase par abaissement de la pression en dessous du seuil de vaporisation. Cette deuxième phase endothermique prend jusqu'à 15 minutes pour un séchage complet de tout le système radiculaire et de ses canalicules. La disparition du flux de vapeur sortant de la dent peut être mesurée avec un débimètre par différence de pression de part et d'autre d'une restriction ou plus simplement au moyen d'un pressostat, le vide engendré par une pompe étant en relation inverse avec son débit. Le niveau minimum de vide fourni par la pompe P pour un bon séchage est de 10³Pa. A cette dépression, tout reste d'eau finit par être vaporisé à la température du corps.

Une fois que le niveau de vide désiré est atteint dans la cavité à obturer et que le ressort 11 est comprimé, il suffit, avantageusement, d'exercer une très légère surpression sur le piston 10 pour que, ajoutée à la dépression exercée en aval de la membrane 6 et à la surpression exercée en amont permette de rompre cette membrane 6. La calibration de cette membrane pourrait d'ailleurs être choisie pour qu'elle se rompe par la simple addition des deux forces susmentionnées sans nécessiter de surpression. A noter que la butée 10a permet d'empêcher l'exercice d'une surpression manuelle, qui aurait pour effet de risquer d'injecter l'agent d'obturation au-delà du système radiculaire.

Dès la rupture de la membrane 6, la dépression de la chambre pulpaire et la pression du ressort 11 s'exercent simultanément et instantanément sur le produit d'obturation contenu dans le réservoir 9 de la seringue 5. Au moment où le produit d'obturation atteint l'extrémité du conduit 2b de l'embout 2 il coupe la connexion entre la pompe à vide P et la chambre pulpaire, de sorte que cette pompe à vide peut être arrêtée. Le système radiculaire de la cavité dentaire peut alors se remplir dans un temps qui dépend de la fluidité de l'agent d'obturation.

Le volume résiduel non rempli sera théoriquement d'environ 1% comparé à une pression atmosphérique de 10⁵ Pa. Compte tenu des résultats observés, il semble que le volume total des minuscules canalicules radiaux bien asséchés absorbe en tout cas tout ou partie de ce 1%, permettant un remplissage total des canaux des racines eux-mêmes.

Le. mélange pâte-pâte, pâte-liquide ou encore pâte-poudre d'un matériau d'obturation à deux composants peut être utilisé avec une consistance avantageusement très légèrement plus fluide que celle d'un mélange d'obturation pour une méthode classique. Le gutta-percha à basse température de fusion peut aussi être utilisé en réchauffant une seringue préalablement remplie de ce matériau. Plus le mélange est fluide plus vite il atteindra l'ensemble de la cavité mais plus grands seront les risques d'apparition de bulles de gaz indésirables lorsqu'il sera soumis au vide et ceci malgré la compensation de pression du ressort.

Un bon dégazage du mélange est nécessaire à un niveau de vide au moins aussi grand que celui auquel s'opère le remplissage. Ce mélange sera introduit dans la seringue d'obturation en veillant à n'inclure aucune bulle entre le piston et la membrane.

De la nature de la membrane 6 dépendra la force de rupture en fonction de la section de la seringue. Une pastille de feuille d'aluminium classique de 5µm d'épaisseur a donné de bons résultats avec une seringue de 5mm de diamètre intérieur.

Le ressort 11 utilisé a une longueur de 18mm, un diamètre extérieur de 3,3mm et une section de fil de 0,4mm. Il a donné une force de 8,8N totalement comprimé, force supporté par la membrane 6 soumise du côté aval au vide sur une section circulaire de 4mm de diamètre.

## Revendications

1. Dispositif d'obturation de la cavité pulpaire et des canaux radiculaires d'une dent dévitalisée, comprenant une pompe à vide (P), un premier conduit de liaison (2b, 2d, 12) adapté d'être mis entre cette pompe à vide (P) et ladite cavité pulpaire, une source (9) de substance fluide d'obturation de cette cavité pulpaire, un second conduit de liaison (2a, 2c, 4) adapté d'être mis entre ladite source (9) de substance fluide et ladite cavité pulpaire, et des moyens de fermeture (6) dudit second conduit (2a, 2c, 4) pour mettre ladite source (9) de substance fluide d'obturation sélectivement en communication avec ladite cavité, **caractérisé en ce que** lesdits moyens de fermeture comportent une membrane (6), calibrée pour se rompre à une pression déterminée.

2. Dispositif selon la revendication 1, **caractérisé en ce qu'**il comporte des moyens élastiquement compressibles (11) et des moyens de mise sous pression (10) de ces moyens élastiquement compressibles (11), pour qu'ils exercent sur la substance fluide d'obturation de ladite source (9), une pression en direction de ladite membrane calibrée (6), inférieure à la pression de rupture de ladite membrane calibrée (6).

3. Dispositif selon l'une des revendications précédentes, **caractérisé en ce que** ladite membrane (6) est calibrée pour résister à l'addition de la dépression à laquelle ladite pompe à vide (P) soumet ladite chambre pulpaire, s'exerçant du côté aval de ladite membrane (6) et à la pression desdits moyens élastiquement compressibles (11) à l'état comprimés, s'exerçant du côté amont de ladite membrane (6).

4. Dispositif selon l'une des revendications précédentes, **caractérisé en ce que** lesdits moyens élastiques de compression (6) sont constitués par un ressort disposé entre deux pistons libres (8, 10).

5. Dispositif selon l'une des revendications précédente, **caractérisé en ce qu'**il comporte des moyens (10a) pour limiter la compression desdits moyens élastiquement compressibles (11).

6. Dispositif selon l'une des revendications précédentes, **caractérisé en ce que** ladite membrane est pincée entre un conduit relativement rigide (5a) et un conduit souple (4) par un élément de serrage annulaire (7).

## Patentansprüche

1. Vorrichtung zum Füllen der Zahnhöhle und der Wurzelkanäle eines devitalisierten Zahnes, die eine Unterdruckpumpe (P), einen ersten Verbindungskanal (2b,2d,12), der so angepasst ist, dass er zwischen der Unterdruckpumpe (P) und der Zahnhöhle positionierbar ist, einen zweiten Verbindungskanal (2a,2c,4), der so angepasst ist, dass er zwischen der Quelle (9) für flüssige Substanz und der Zahnhöhle positionierbar ist, und Verschlusseinrichtungen (6) für den zweiten Kanal (2a,2c,4) aufweist, um die Quelle (9) für flüssige Füllsubstanz selektiv mit der Höhle in Verbindung zu bringen,
**dadurch gekennzeichnet, dass**
die Verschlusseinrichtungen eine Membran (6) umfassen, die so kalibriert ist, dass sie bei einem zuvor festgelegten Druck reißt.

2. Vorrichtung nach Anspruch 1,
**dadurch gekennzeichnet, dass**
sie elastisch zusammendrückbare Einrichtungen (11) und Einrichtungen (10) zur Druckbeaufschlagung der elastisch zusammendrückbaren Einrichtungen (11) aufweist, so dass sie auf die flüssige Füllsubstanz der Quelle (9) einen Druck in Richtung der kalibrierten Membran (6) ausüben, der geringer als der kritische Druck der kalibrierten Membran (6) ist.

3. Vorrichtung nach einem der vorangegangenen Ansprüche,
**dadurch gekennzeichnet, dass**
die Membran (6) so kalibriert ist, dass sie dem hinzugefügten Unterdruck, den die Unterdruckpumpe (P) auf den Wurzelkanal ausübt, der auf die Niederdruckseite der Membran (6) ausgeübt wird, und dem Druck der elastisch zusammendrückbaren Einrichtungen (11) in zusammengedrücktem Zustand widerstehen kann, der auf die Überdruckseite der Membran (6) ausgeübt wird.

4. Vorrichtung nach einem der vorangegangenen Ansprüche,
**dadurch gekennzeichnet , dass**
die elastischen Kompressionseinrichtungen (6) aus einer zwischen zwei freien Kolben (8,10) angeordneten Feder bestehen.

5. Vorrichtung nach einem der vorangegangenen Ansprüche,
**dadurch gekennzeichnet, dass**
sie Einrichtungen (10a) zur Begrenzung der Kompression der elastisch zusammendrückbaren Einrichtungen (11) aufweist.

6. Vorrichtung nach einem der vorangegangenen Ansprüche,
**dadurch gekennzeichnet, dass**
die Membran zwischen einem relativ starren Kanal (5a) und einem weichen Kanal (4) von einem ringförmigen Klemmelement (7) umklammert ist.

## Claims

1. A device for sealing the pulp cavity and root canals of a devitalized tooth; comprising a vacuum pump (P), a first connecting conduit (2b, 2d, 12) designed to be arranged between this vacuum pump (P) and said pulp cavity, a source (9) of fluid substance for sealing this pulp cavity, a second connecting conduit (2a, 2c, 4) designed to be arranged between said source (9) of fluid substance and said pulp cavity, and means (6) for closing said second conduit (2a, 2c, 4) in order to bring said source (9) of fluid sealing substance selectively into communication with said cavity, **characterized in that** said closing means comprises a membrane (6) calibrated to rupture at a defined pressure.

2. The device according to claim 1, **characterized in that** it comprises elastically compressible means (11) and means (10) for pressurising this elastically compressible means (11) for exerting on the fluid sealing substance in said source (9), a pressure in the direction of said calibrated membrane (6), lower than the pressure necessary for rupturing said calibrated membrane (6).

3. The device according to any one of the preceding claims, **characterized in that** said membrane (6) is calibrated to resist the addition of the underpressure to which said vacuum pump (P) subjects said pulp chamber, exerted downstream of said membrane (6), and the pressure of said elastically compressible means (11) in the compressed state, exerted upstream of said membrane (6).

4. The device according to any one of the preceding claims, **characterized in that** said elastic compression means (6) is formed by a spring arranged between two free pistons (8, 10).

5. The device according to any one of the preceding claims, **characterized in that** it comprises means (10a) for limiting the compression of said elastically compressible means (11).

6. The device according to any one of the preceding claims, **characterized in that** said membrane is pinched between a relative rigid conduit (5a) and a flexible conduit (4) by an annular clamping element (7).
